# EUROPEAN PATENT SPECIFICATION

(11) **EP 4 583 296 B1**
(45) Date of publication and mention of the grant of the patent: **13.05.2026**
(21) Application number: 24220032.7
(22) Date of filing: 16.12.2024
(51) Int. Cl.: H01M 50/503

(54) **CELLS CONTACT SHEETS, CELLS CONTACT SYSTEMS, AND BATTERY PACKS**
ZELLENKONTAKTFOLIEN, ZELLENKONTAKTSYSTEME UND BATTERIEPACKS
FEUILLES DE CONTACT D'ÉLÉMENTS, SYSTÈMES DE CONTACT D'ÉLÉMENTS ET BLOCS-BATTERIES

(30) Priority: 31.12.2023 CN 202323671458 U; 27.03.2024 WO PCT/CN2024/084037
(43) Date of publication of application: 09.07.2025
(73) Proprietor: Eve Energy Co., Ltd., Huizhou, Guangdong 516006 (CN)
(72) Inventor: LIAO, Hulong, Huizhou, Guangdong, 516006 (CN)
(74) Representative: Berggren Oy

(56) References cited:
- EP-A2- 4 195 371
- DE-A1- 102019 134 469
- US-A1- 2012 328 920
- US-A1- 2022 255 141

## Description

### TECHNICAL FIELD

The present application relates to battery technologies, in particular to cells contact sheets, cells contact systems and battery packs.

### BACKGROUND

Generally, a battery pack includes a housing, a battery module, a battery management system (BMS) board, and a cells contact system (CCS) that electrically connects the battery module with the BMS board. The battery module, the BMS board and the CCS are arranged in the housing. The CCS includes a busbar electrically connected to cells of the battery module and a cells contact sheet electrically connected to the busbar and the cells. The cells contact sheet is usually a flexible printed circuit board (FPCB). The cells contact sheet is used to transmit temperature signals and voltage signals of the cells to the BMS board through a harness and a connector in sequence.

US 2012/328920 A1 discloses s battery module. The battery module includes: a plurality of connecting members electrically connecting electric terminals of adjacent electric cells; and a flexible flat cable formed by flatly encapsulating an outer circumference of a flat conductor with an insulating resin and joining the plurality of connecting members. Portions of the flexible flat cable to be disposed between adjacent connecting members are provided with folded portions formed by folding the flexible flat cable at folded lines. The folded lines extend in a direction crossing a longitudinal direction of the flexible flat cable.

DE 10 2019 134469 A1 discloses a battery connection module including a plurality of busbars, two bridge busbars, an elastic printed circuit board, an electrode unit and a power connection bar. Each bridge busbar has a first collecting section for electrically connecting a first battery pack, a second collecting section for electrically connecting a second battery pack, and a bridge section connected between the two aforementioned. The elastic printed circuit board comprises a cantilever arm and a temperature sensor attached to the cantilever arm, a cutout suitable for receiving the temperature sensor being formed on the busbars. The electrode unit comprises a plate electrode connected to the busbars by an overlap connection, a plate electrode holding part holding the plate electrode, and a current connection base attached to the plate electrode. The power connector has a power connector coupled to the power connector via a buckle connection structure, an alignment structure, a fastener and a socket.

US 2022/255141 A1 discloses a battery connection module adapted to connect a plurality of batteries, the battery connection module includes busbars, a circuit board and bridging pieces. The busbars are used to be connected to the batteries. The bridging pieces are connected between the corresponding busbars and the circuit board, each bridging piece has a circuit board connection segment and a busbar connection segment which are arranged along a straight direction and are respectively connected to the circuit board and the corresponding busbar and a buffering segment which is positioned between the circuit board connection segment and the busbar connection segment, the buffering segment includes at least two buffering strips, the at least two buffering strips are constructed as symmetry in a transverse direction with respect to a central line extending along the straight direction, each buffering strip has at least one curving portion.

EP 4 195 371 A2 discloses a battery pack for a vehicle. The battery pack includes a battery unit with overlapped battery cells; unit busbars respectively coupled to electrodes at opposite ends of the battery cells and extended upward from the battery unit; unit busbar support bodies located at opposite ends of the battery unit and supporting the unit busbars and the battery cells; a lower tray on which overlapped battery units are loaded and supporting lower surfaces and side surfaces of the battery units; a pressing plate disposed between each of side walls of the lower tray and the battery units and configured to press the battery units in an overlapped direction of the battery units; and a top cover forcibly coupled to the overlapped battery units in a downward direction to cover upper portions of the battery units and configured to supply pressure for the pressing plate to press the battery units.

When the battery module includes multiple cell groups, in order to reduce the number of electrical parts and the difficulty of wiring, a cells contact sheet is usually used to acquire the temperature signals and voltage signals of the multiple cell groups. However, during the use of the battery module, a cell may expand due to rising temperature and thus produce tension on the cells contact sheet welded to the cell, so that the weld between the cells contact sheet and the cell may be broken and even the cells contact sheet may be torn. Therefore, the reliability of the acquisition result may be reduced.

### SUMMARY

The invention is set out in the appended set of claims.

### BRIEF DESCRIPTION OF THE DRAWINGS

In order to more clearly illustrate the embodiments of the present disclosure or related art, the following figures will be described in the embodiments are briefly introduced. It is obvious that the drawings are merely some embodiments of the present disclosure, a person having ordinary skill in this field can obtain other figures according to these figures without paying the premise.
FIG. 1 schematically shows a structure of a cells contact sheet according to one or more embodiments of the present application.
FIG. 2 is a side view of a cells contact sheet according to one or more embodiments of the present application.
FIG. 3 is an enlarged view of part A in FIG. 1.
FIG. 4 schematically shows a structure of a cells contact system according to one or more embodiments of the present application.
FIG. 5 is an enlarged view of part B in FIG. 4.

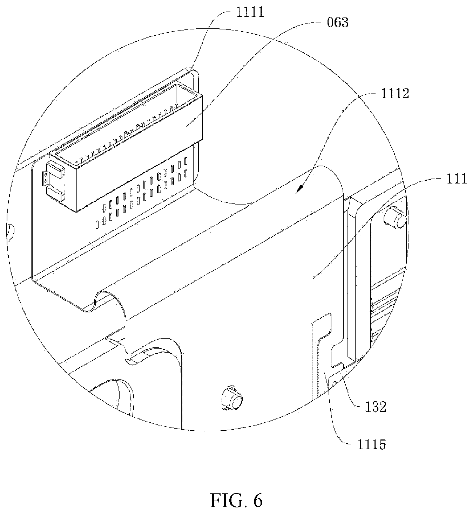

FIG. 6 is an enlarged view of part C in FIG. 4.
FIG. 7 is an enlarged view of part D in FIG. 4.
FIG. 8 schematically shows a structure of a battery pack according to one or more embodiments of the present application.
FIG. 9 schematically shows wiring between a battery charge and discharge interface and a battery energy distribution unit (BDU) of a battery pack according to one or more embodiments of the present application.
FIG. 10 schematically shows wiring of an acquisition harness of a battery pack according to one or more embodiments of the present application is a schematic diagram illustrating fallbackRAR according to an embodiment of the present disclosure.

### DETAILED DESCRIPTION

Embodiments of the present disclosure are described in detail with the technical matters, structural features, achieved objects, and effects with reference to the accompanying drawings as follows. Specifically, the terminologies in the embodiments of the present disclosure are merely for describing the purpose of the certain embodiment, but not to limit the disclosure.

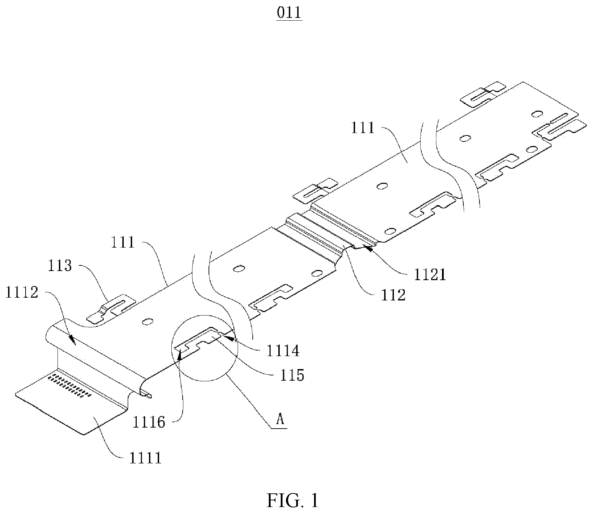

FIG. 1 schematically shows a structure of a cells contact sheet 011 applicable to a battery module according to one or more embodiments of the present application. For example, the battery module includes two cell groups. The cells contact sheet 011 includes two cells contact sub-sheets 111 and a flexible conductive connecting sheet 112. The two cells contact sub-sheets 111 are arranged successively in parallel. The two cells contact sub-sheets 111 are configured respectively to acquire work signals of the two cell groups. The connecting sheet 112 is arranged between the two cells contact sub-sheets 111. The two ends of the connecting sheet 112 are respectively connected with the two cells contact sub-sheets 111, and the connecting sheet 112 is provided with a first bending structure 1121, which is configured to deform when the two cell groups move away from or close to each other.

It can be understood that when the two cell groups move away from each other or close to each other, the first bending structure 1121 will undergo flexible deformation due to the flexibility of the connecting sheet 112. When the connecting sheet 112 is an elastic metal sheet, the first bending structure 1121 also has an elastic deformation. Among them, the work signals are mainly voltage signals of the cells and temperature signals of the cell groups.

In addition, the cells contact sub-sheet 111 has a voltage acquisition area 1113, the voltage acquisition area 1113 is connected with a busbar 131, and the busbar 131 is connected with the cell, so as to realize the cells contact sub-sheet 111 acquiring the voltage signal of the cell. The cell group includes a plurality of cells connected in series or in parallel through the busbar 131.

Illustratively, the cells contact sub-sheet 111 and the connecting sheet 112 are both flexible circuit boards, and the cells contact sheet 011 is an integrally-formed part. The flexible circuit board is a structure formed by etching aluminium foil or copper foil in one body to have a number of lines for transmitting electrical signals.

In the present embodiment, by arranging a first bending structure 1121 at the part of the cells contact sheet 011 between the two cell groups, the cells contact sheet is provided with a buffer part formed based on the first bending structure 1121, in this way, when the cell groups produce thermal expansion, the buffer part can be deformed to buffer the expansion between the cell groups to pull the cells contact sheet 011, and then improve the stability of the welding part between the cells contact sheet 11 and the cells, and avoid the cells contact sheet 011 being torn, and finally improve the reliability of the cells contact sheet 011.

In addition, there are assembly tolerances between the cell groups and the housing 002. Therefore, when assembling the cell groups to the housing 002, the first bending structure 1121 can be squeezed or stretched to make the two cells contact sub-sheets 111 fit the assembly position of the cell groups, so as to improve the pulling or squeezing at the connection part between the cells contact sheet 011 and the cell groups due to assembly errors, and thus improve the reliability of the connection between the cells contact sheet 011 and the cell groups.

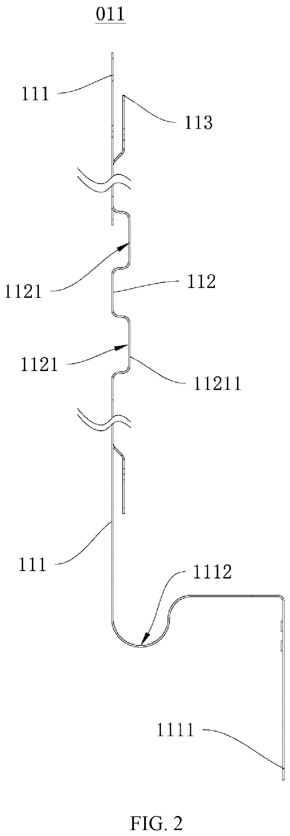

FIG. 2 shows the side view of the cells contact sheet 011 according to one or more embodiments of the present application. In one or more embodiments, the connecting sheet 112 includes a sheet body and a first bending structure 1121, and the first bending structure 1121 is convex to the cell groups from the location of the sheet body of the connecting sheet 112.

It can be understood that a busbar 131 is arranged between the cells contact sheet 111 and the cells, and the voltage acquisition area 1113 of the cells contact sheet 011 is welded with the busbar 131 to acquire the voltage information of the cells. The first bending structure 1121 is not used for acquiring voltage signals, so on the side of the bending structure 1121 facing the cell group is the holder 012.

Based on this, in the present embodiment, the first bending structure 1121 is convex towards the cell group from the location of the sheet body of the connecting sheet 112, so that the cells contact sheet 011 can have a structure for buffering the pulling or squeezing of the cells contact sheet 011, and the first bending structure 1121 is overlapped with the busbar 131 on the axis of the cells, thus, avoiding the arranging of the first bending structure 1121 increases the height of the cells contact system 001, which is conducive to the layout of the electrical parts inside the battery pack.

In one or more embodiments, the first bending structure 1121 shown in FIG. 2 has a first surface 11211 located in the middle of the first bending structure 1121 and toward the cell groups. The first surface 11211 is parallel to the cells contact sub-sheet 111.

It can be understood that the first bending structure 1121 is a U-shaped structure convex to the cell groups, where the side of the part facing the cell groups is the first surface 11211. In particular, the connecting sheet 112 includes two extension segments and a first bending structure 1121 located between the two extension segments. The two extension segments are respectively connected with two cells contact sub-sheets 111. The first bending structure 1121 includes a first bending segment, a second bending segment and a third bending segment successively connected. The first bending segment and the third bending segment are arranged relative to each other. The ends of the first bending segment and the third bending segment deviated from the second bending segment are connected to the two extension segments respectively. The first surface 11211 is on the side of the second bending segment facing the cell group.

In the present embodiment, through the above arranging, the first bending structure 1121 has a longer length in a certain space, so that the first bending structure 1121 has a larger buffer size, and then the first bending structure 1121 can achieve a better buffer effect in a limited space.

In one or more embodiments, the corners of the first bending structure 1121 shown in FIG. 2 are rounded.

It is understood that the joint between one extension segment and the first bending segment, the joint between the first bending segment and the second bending segment, the joint between the second bending segment and the third bending segment, and the joint between the third bending segment and another extension segment are corners. Rounded corners are provided at each of the above joints. The rounded corners are formed by bending the connecting sheet 112.

In the present embodiment, by providing a rounded corner at the corner of the first bending structure 1121, the stress at the corner can be reduced, thereby improving the impact resistance of the cells contact sheet 011 and thereby improving the reliability of the cells contact sheet 011.

In one or more embodiments, one of the two cells contact sub-sheets 111 shown in FIG. 2 is the output cells contact sub-sheet 111. The output cells contact sub-sheet 111 has a first signal output terminal 1111. The output cells contact sub-sheet 111 is provided with a second bending structure 1112, and the second bending structure 1112 is arranged near the first signal output terminal 1111. The second bending structure 1112 is configured to deform when the first signal output terminal 1111 and the cell groups move away from or close to each other.

It is understood that the first signal output terminal 1111 is connected to the BMS board. Generally, the first signal output terminal 1111 is connected with the BMS board via a connector 063 to transmit the acquired work signals to the BMS board. In addition, among the two cells contact sub-sheets 111, the cells contact sub-sheet 111 closer to the BMS board is the output cells contact sub-sheet 111, and the end of the output cells contact sub-sheet 111 near the BMS board is the first signal output terminal 1111.

Since the first signal output terminal 1111 is connected to the BMS board, the first signal output terminal 1111 is fixed. When the cells generate thermal expansion, it will pull on the joint between the first signal output terminal 1111 and the BMS board. Based on this, in the present embodiment, a second bending structure 1112 is provided at one end of the output cells contact sub-sheet 111 near the first signal output terminal 1111, so that the end of the output cells contact sub-sheet 111 near the first signal output terminal 1111 is provided with a structure for buffering the pulling of the first signal output terminal 1111 when the cell groups expand. Thus, the reliability of the connection between the cells contact sheet 011 and the BMS board is improved, and the cells contact sheet 011 is prevented from being torn.

In one or more embodiments, the second bending structure 1112 shown in FIG. 2 is an arc structure with concave surface away from the first signal output terminal 1111.

Illustratively, the side of the second bending structure 1112 away from the first signal output terminal 1111 is tangent to the side of the cells contact sub-sheet 111 located at the second bending structure 1112 away from the first signal output terminal 1111.

In the present embodiment, by arranging the second bending structure 1112 as an arc structure, the stress of the second bending structure 1112 can be reduced, thereby improving the impact resistance of the cells contact sheet 011 and thereby improving the reliability of the cells contact sheet 011.

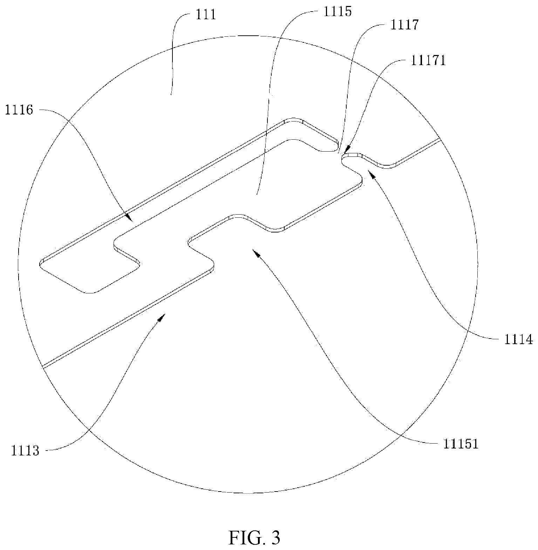

FIG. 3 is an enlarged view of part A in FIG. 1. According to the invention, cells contact sub-sheet 111 has a voltage acquisition area 1113. The voltage acquisition area 1113 is provided with an acquisition notch 1114. An acquisition terminal sheet 1115 which is configured to acquire the voltage of the cell group is provided in the acquisition notch 1114. The acquisition terminal sheet 1115 has a first end and a second end opposite to each other, and the first end is connected with one surface of the acquisition notch 1114. The second end is connected with another surface of the acquisition notch 114. From the first end to the second end, there is a gap 1116 between the acquisition terminal sheet 1115 and the acquisition notch 1114.

It can be understood that the voltage acquisition area 1113 is the area on the cells contact sub-sheet 111 connected with the busbar 131. Specifically, the acquisition terminal sheet 1115 is welded with the busbar 131 to acquire the voltage information of the cell.

In the present embodiment, through the above arranging, on the one hand, the cells contact sub-sheet 111 can acquire the voltage information of the cells; on the other hand, when the cells expands, the pulling force on the acquisition terminal sheet 1115 is mainly applicable to the first and second ends of the acquisition terminal sheet 1115, thus reducing the pulling force borne by the acquisition terminal sheet 1115, and then avoiding the weld between the acquisition terminal sheet 1115 and the busbar 131 falling off. The stability of the connection between the acquisition terminal sheet 1115 and the busbar 131 can be improved.

As shown in FIG. 3, in one or more embodiments, the second end of the acquisition terminal sheet 1115 is connected with another surface of the acquisition notch 1114 through a connection structure, and the connection structure is configured to break when the cells contact sub-sheet 111 is pulled.

It is understood that the pulling force of disconnecting the connection structure is less than that of disconnecting the connection between the acquisition terminal sheet 1115 and the busbar 131. In addition, the connecting structure fixed the acquisition terminal sheet 1115 in the acquisition notch 1114, which can avoid the second end of the acquisition terminal sheet 1115 falling down due to gravity and cause folding, so as to ensure the convenience of the assembly of the cells contact sheet.

In the present embodiment, by connecting the second end of the acquisition terminal sheet 1115 with the surface of the acquisition notch 1114 through the connection structure, when the acquisition terminal sheet 1115 bearing relatively large pulling force, the connection structure at one end of the acquisition terminal sheet 1115 can be disconnected through the pulling force to reduce the pulling force borne by the acquisition terminal sheet 1115. Thus, the weld between the acquisition terminal sheet 1115 and busbar 131 can be avoided from falling off, and the stability of the connection between the acquisition terminal sheet 1115 and busbar 131 can be improved.

The connection structure may adopt a structure thinner than the acquisition terminal sheet 1115, or a material with lower strength than the joint between the first end of the acquisition terminal sheet 1115 and the acquisition notch 1114. In particular, the connection structure includes a connection strip 1117. The two ends of the connection strip 1117 are respectively connected with the second end of the acquisition terminal sheet 1115 and a surface of the acquisition notch 1114. The middle part of the connection strip 1117 is provided with a cutting notch 11171. The cutting notch 11171 is configured to cause the connection strip 1117 to break when the cells contact sub-sheet 111 is pulled.

In one or more embodiments, the acquisition terminal sheet 1115 shown in FIG. 3 is provided with a buffer notch 11151. The buffer notch 11151 is arranged between the first end of the acquisition terminal sheet 1115 and the second end of the acquisition terminal sheet 1115.

In the present embodiment, the stress of the acquisition terminal sheet 1115 during thermal expansion can be alleviated by arranging the buffer notch 11151, thereby improving the stability of the connection between the acquisition terminal sheet 1115 and the busbar 131.

In one or more embodiments, the edge of the cells contact sub-sheet 111 shown in FIG. 1 is connected with a bent terminal sheet 113 configured to acquire the temperature of the cell group.

It is understood that the bent terminal sheet 113 is located at the outer edge of the cells contact sub-sheet 111 and formed in one piece with the cells contact sub-sheet 111.

In the present embodiment, by using the bent terminal sheet 113 to acquire the temperature information of the cell group, the deformability of the bent terminal sheet 113 can be used to buffer the pulling of the cells contact sheet 011 by the thermal expansion of the cells, thereby improving the load bearing capacity of the cells contact sheet 011, and thereby preventing the cells contact sheet 011 from being torn or the disconnection between the bent terminal sheet 113 and the cells contact sub-sheet 111. Thus, the reliability of the cells contact sheet 011 can be improved.

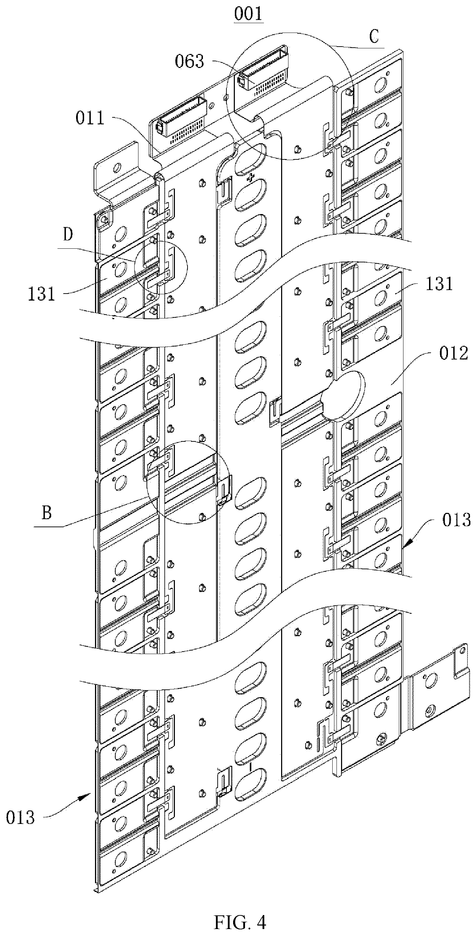

FIG. 4 schematically shows the structure of the cells contact system 001 according to one or more embodiments of the present application. Accordingly, a cells contact system 001 is provided in embodiments of the present application. The cells contact system 001 includes a holder 012, busbar groups 013 and the aforementioned cells contact sheet 011. The busbar groups 013 include two busbar groups 013. The two busbar groups 013 are arranged successively on the holder 012. The two busbar groups 013 are configured to respectively connect with the two cell groups. Two cells contact sub-sheets 111 are connected to the two busbar groups 013 respectively. The connecting sheet 112 is located between the two adjacent busbar groups 013.

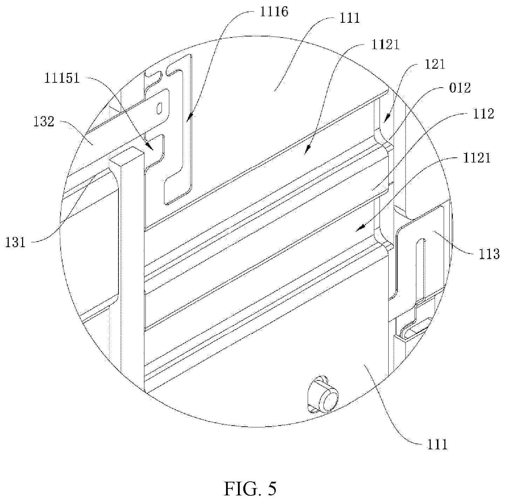

Illustratively, there are two first bending structures 1121 arranged at intervals along the arranging direction of the two cells contact sub-sheets 111. The first bending structure 1121 is convex from the position of the sheet body of the connecting sheet 112 towards the cell groups. The cells contact sub-sheet 111 is arranged on the holder 012. Groove 121 is provided on the holder 012. There are two grooves 121. The two first bending structures 1121 are located in the two grooves 121 respectively, as shown in FIG. 5, which is an enlarged view of part B in FIG. 4. The first bending structure 1121 is fitted with gap 1116 of the groove 121. The gap 1116 between the first bending structure 1121 and the groove 121 is used to provide deformation space for a first bend of the first bending structure 1121, so that the deformation of the first bend of first bending structure 1121 is not hindered.

In addition, the concave surface of the second bending structure 1112 faces the end face of the holder 012, as shown in FIF. 6, which is an enlarged view of part C in FIG. 4.

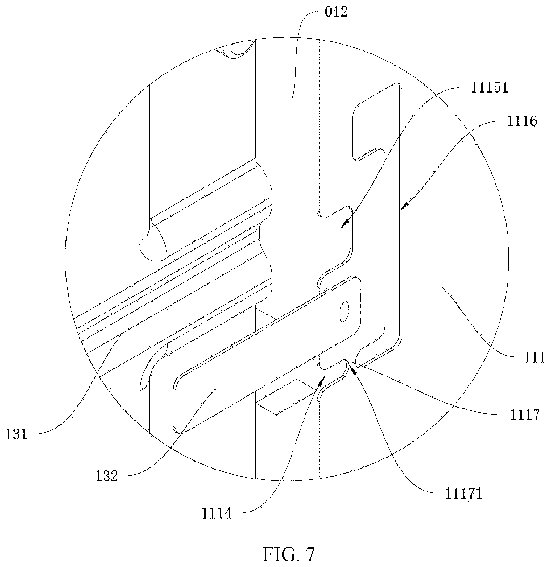

Among them, the holder 012 is a blister holder. Busbar groups 013 include a plurality of busbars 131, which is used to parallel two adjacent cells. Accordingly, a plurality of voltage acquisition areas 1113 are arranged on the cells contact sub-sheets 111, and the plurality of voltage acquisition areas 1113 are respectively connected with the plurality of busbars 131. Busbar 131 is an O-state aluminium bar. Busbar 131 is welded to the pole of the cell. The connection structure between the busbar 131 and cells contact sub-sheet 111 is shown in FIG. 7, which is an enlarged view of part D in FIG. 4. The voltage acquisition area 1113 of the cells contact sub-sheet 111 is connected to the busbar 131 through the conductive sheet 132. In particular, one end of the conductive sheet 132 is welded to the part of the acquisition terminal sheet 1115 between the buffer notch 11151 and the second end of the acquisition terminal sheet 1115, and the other end is welded to the end of the busbar 131 near the cells contact sub-sheet 111.

In the present embodiment, by adopting the aforementioned cells contact sheet 011, the first bending structure 1121 can be used to generate deformation during thermal expansion of the cell groups to buffer the pull of the expansion between the cell groups on the cells contact sheet 011, thereby improving the stability of the welding part between the cells contact sheet 011 and the cells, and avoiding the tearing of the cells contact sheet 011, finally improving the reliability of the cells contact system 001.

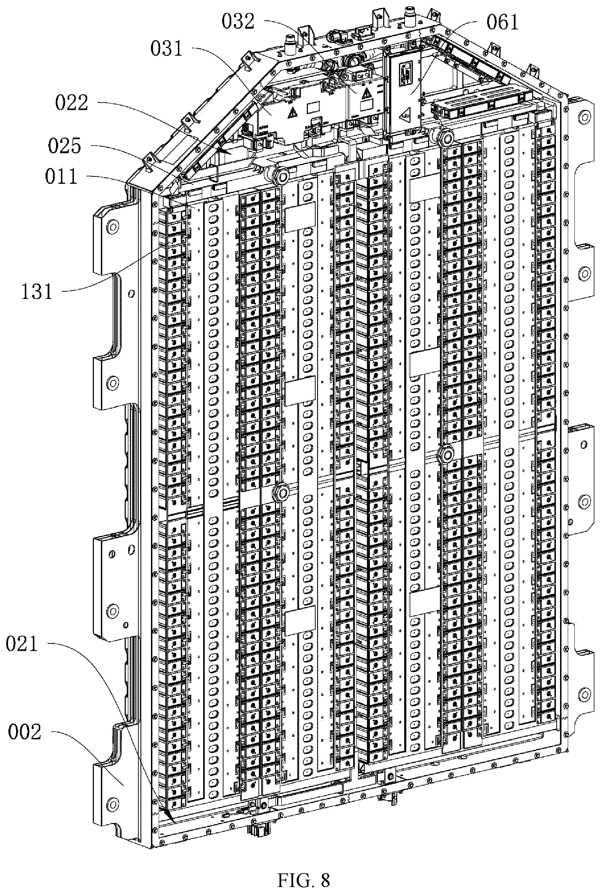

FIG. 8 schematically shows a structure of a battery pack according to one or more embodiments of the present application (the cover of housing 002 is hidden in FIG. 8 for ease of showing the internal structure of the housing). Accordingly, one or more embodiments of the present application further provide a battery pack including a housing 002, a battery module 008, a BMS board and the aforementioned cells contact system 001. The housing 002 has a first accommodating cavity 021 and a second accommodating cavity 022 arranged in a longitudinal direction. The battery module 008 is arranged in the first accommodating cavity 021. The battery module 008 includes two cell groups 081 arranged in the longitudinal direction. The BMS board is arranged in the second accommodating cavity 022. The cells contact system 001 is arranged in the first accommodating cavity 021. Two busbars 131 are connected with two cell groups 081 respectively. Among the two cells contact sub-sheets 111, one is the output cells contact sub-sheet 111. The first signal output terminal 1111 of the output cells contact sub-sheet 111 is connected to the BMS board. Specifically, the first signal output terminal 1111 is connected to the BMS board via connector 063.

Illustratively, the first accommodating cavity 021 and the second accommodating cavity 022 are formed by separating the inner cavity of the battery pack between via an end partition 025. In addition, a cross beam 023 is arranged in the first accommodating cavity 021. The cross beam 023 is connected with the cavity wall of the first accommodating cavity 021. The cross beam 023 is located between the two cell groups 081 of battery module 008 to separate the two cell groups 081.

In the present embodiment, by adopting the cells contact system 001 mentioned above, during thermal expansion of cell groups 081, the deformation of the first bending structure 1121 can be generated to buffer the pull of the expansion between cell groups 081 on the cells contact sheet 011, thereby improving the stability of the welding part between the cells contact sheet 011 and the cells, and avoiding the tearing of the cells contact sheet 011, finally improving the reliability of the battery pack.

As shown in FIG. 8, in one or more embodiments, there are four battery modules 008 and four cells contact systems 001. The four battery modules 008 are arranged along a transverse direction in the first accommodating cavity 021. The transverse direction is perpendicular to the longitudinal direction. The four battery modules 008 and the four cells contact systems 001 are arranged according to a one-to-one correspondence. In order to improve the assembling stability of battery modules 008, a longitudinal beam 024 is arranged between two adjacent battery modules 008, and the longitudinal beam 024 is connected with the inner wall of housing 002.

It can be understood that there are eight cell groups 081 corresponding to four battery modules 008. The eight cell groups 081 are connected in series through O-state aluminium bars.

As shown in FIG. 8, in one or more embodiments, the battery pack further includes a battery energy distribution device (for example, a battery energy distribution unit (BDU)), a battery charge and discharge interface, and a charge and discharge connection bar. The BDU is arranged in the second accommodating cavity 022, the battery charge and discharge interface is arranged on the side of the housing 002 away from the second accommodating cavity 022, two ends of the charge and discharge connection bar are connected with the BDU and the battery charge and discharge interface respectively, and the charge and discharge connection bar is arranged on the end of the longitudinal beam 024 away from the inner wall of the housing 002.

Illustratively, the charge and discharge connection bar includes a middle bar and end bars, and the end bars include two end bars, an end bar connects the end of the middle bar with the BDU, and the other end bar connects the other end of the middle bar with the battery charge and discharge interface, and the end bars are soft metal bars. The middle bar is a 6-series aluminium bar, and the end bars are specifically copper bars. The end bars and the middle bar are welded together by polymer diffusion welding. The soft copper bar can be deformed during assembling to effectively absorb assembly tolerances, thus improving the convenience of connecting the charge and discharge connection bar to the BDU and the battery charge and discharge interface. At the same time, the soft copper bar can better absorb the pulling force caused by the vibration of the vehicle during driving, and avoid disconnection of the high voltage circuit or leakage due to the tension of the charge and discharge connection bar.

In addition, the battery pack is also equipped with a fast charge interface 071. The fast charge interface 071 is located on the side of the battery pack near the BDU.

In the conventional assembling mode, the charge and discharge connection bar is arranged on the wall of the housing 002. The charge and discharge connection bar needs to retain a safe distance from the busbar 131 and the cells, so the first inner cavity needs to have enough space in the longitudinal direction to meet requirements of the installation of relevant parts, and also needs to meet requirements of the safety spacing between the aforementioned parts.

Based on this, in the present embodiment, the charge and discharge connection bar is arranged on the longitudinal beam 024. On the one hand, the space occupied by the longitudinal beam 024 can be utilized, so that the required installation space of the charge and discharge connection bar can be overlapped with the space of the longitudinal beam 024, and the utilization rate of the internal space of the battery pack can be improved. Thus, the original space for arranging the charge and discharge connection bar can be used to increase the transverse size of the cells, so as to improve the energy density of the battery pack. On the other hand, the charge and discharge connection bar is set on the longitudinal beam 024, which can avoid the outer wall of the battery pack being squeezed and cause the insulation layer of the charge and discharge connection bar to break, so as to improve the reliability of the battery pack.

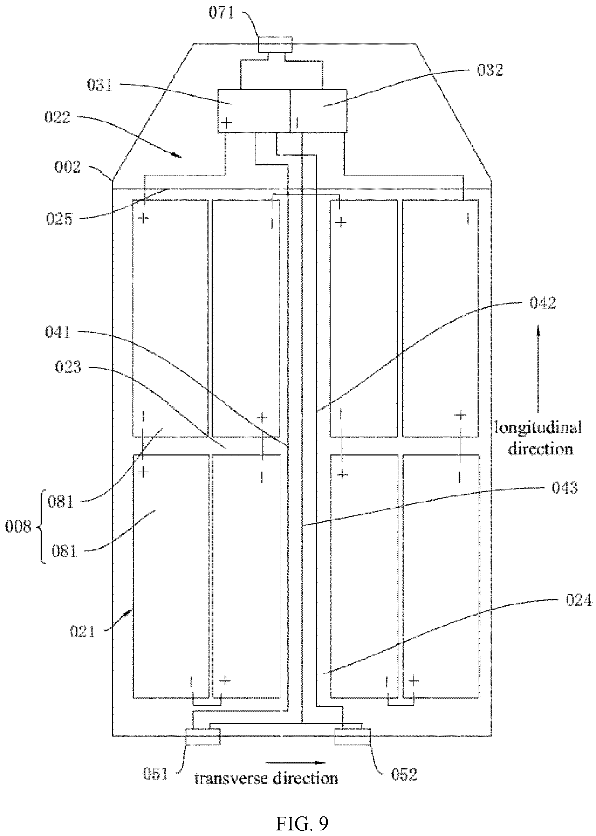

FIG. 9 schematically shows wiring between a battery charge and discharge interface and a BDU of a battery pack according to one or more embodiments of the present application. In one or more embodiments, the battery charge and discharge interface includes charge interface 051 and discharge interface 052. The charge and discharge connection bar includes a charge positive bar 041, a discharge positive bar 042 and a charge and discharge negative bar 043. The positive port of charge interface 051 is connected to the positive port 031 of the BDU through charge positive bar 041. The positive port of the discharge interface 052 is connected to the positive port 031 of the BDU via the discharge positive bar 042. One end of the charge and discharge negative bar 043 is connected to the negative port of the charge interface 051 and the negative port of the discharge interface 052, and the other end is connected to the negative port 032 of the BDU.

In FIG. 9, from left to right, the three long solid lines in the middle are the charge positive bar 041, the charge and discharge negative bar 043, and the discharge positive bar 042 in sequence.

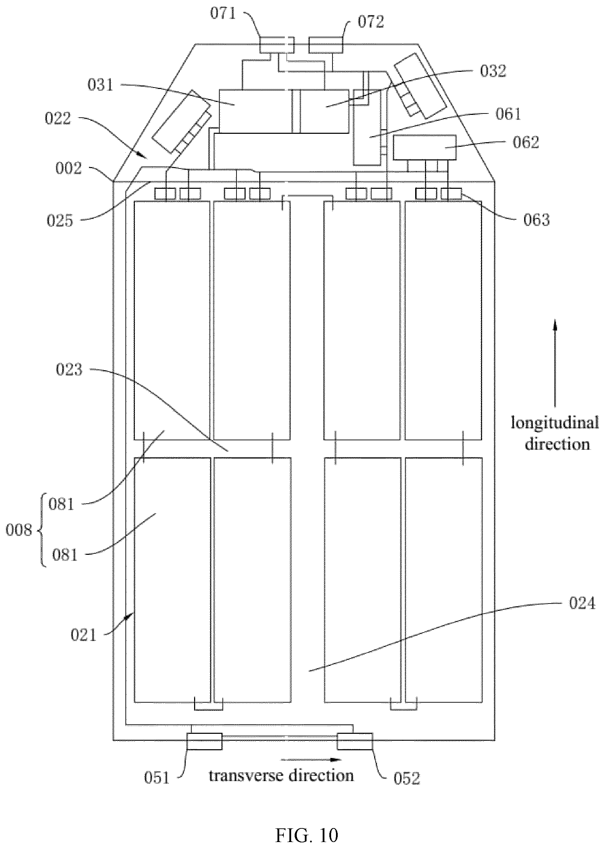

FIG. 10 schematically shows wiring of harnesses for part of acquisition signals of a battery pack according to one or more embodiments of the present application. The BMS board includes the BMS main board 061 and three BMS slave boards 062.

It is understood that the battery pack includes four battery modules 008. And each battery module 008 includes two cell groups 081. The two battery modules 081 include of 25 cells and 26 cells respectively. Therefore, the signal source is too many, and only one BMS main board 061 is not conducive to data processing. Based on this, the BMS board is set as one BMS main board 061 and three BMS slave board 062, which can improve the data processing efficiency, and then improve the reliability of the signal acquisition of the battery pack. Specifically, the BMS slave board 062 transforms the analog signals from the cells contact sheet 011 into a digital signal, and transmits the digital signals to the BMS main board 061 through the daisy chain, and the BMS main board 061 is connected to the control system of the vehicle through the communication interface 072.

While the present disclosure has been described in connection with what is considered the most practical and preferred embodiments, it is understood that the present disclosure is not limited to the disclosed embodiments but is intended to cover various arrangements made without departing from the scope of the broadest interpretation of the appended claims.

## Claims

1. A cells contact sheet (011) being integrally-formed and applicable to a battery module comprising a plurality of cell groups, wherein the cells contact sheet (011) comprises:
a plurality of cells contact sub-sheets (111) configured to acquire work signals of the plurality of cell groups, respectively; and
at least one connecting sheet (112) being flexible and electrically conductive,
wherein each of the at least one connecting sheet (112) is arranged between every two adjacent ones of the cells contact sub-sheets (111) to connect the every two adjacent ones of the cells contact sub-sheets (111) to each other;
the each of the at least one connecting sheet (112) is provided with a first bending structure (1121) configured to deform when two of the cell groups respectively corresponding to the every two adjacent ones of the cells contact sub-sheets (111) move away from each other or close to each other, **characterised by** the fact that each of the cells contact sub-sheets has a voltage acquisition area (1113) comprising an acquisition notch (1114);
an acquisition terminal sheet (1115) is arranged in the acquisition notch (1114) to acquire a voltage signal of one of the cell groups corresponding to the each of the cells contact sub-sheets;
the acquisition terminal sheet (1115) has a first end connected with a first side surface of the acquisition notch (1114), and a second end being opposite to the first end and connected with a second side surface of the acquisition notch (1114); and
a gap (1116) extending in a direction from the first end to the second end is formed between the acquisition terminal sheet (1115) and the acquisition notch (1114).

2. The cells contact sheet of claim 1, **characterized in that** the each of the at least one connecting sheet further comprises a sheet body, and the first bending structure protrudes, relatively to the sheet body, toward the two of the cell groups.

3. The cells contact sheet of claim 2, **characterized in that** the first bending structure has a first surface (11211), and the first surface (11211) is in a middle of the first bending structure and faces the two of the cell groups; and
the first surface (11211) is parallel to each of the cells contact sub-sheets.

4. The cells contact sheet of claim 3, **characterized in that** each corner of the first bending structure is rounded.

5. The cells contact sheet of any one of claims 1-4, **characterized in that** one of the cells contact sub-sheets is provided with a first signal output terminal (1111) and a second bending structure (1112) close to the first signal output terminal (1111); and
the second bending structure (1112) is configured to deform when the first signal output terminal (1111) and two of the cell groups corresponding to the one of the cells contact sub-sheets move away from each other or close to each other.

6. The cells contact sheet of claim 5, **characterized in that** the second bending structure comprises an arc-shaped structure having a concave side away from the first signal output terminal.

7. The cells contact sheet of claim 1, **characterized in that** the second end of the acquisition terminal sheet is connected with the second side surface of the acquisition notch through a connection structure, and the connection structure is configured to break when the each of the cells contact sub-sheets is pulled.

8. The cells contact sheet of claim 7, **characterized in that** the connection structure comprise a connection strip (1117) having two ends respectively connected with the second end of the acquisition terminal sheet and the second side surface of the acquisition notch; and
a cutting notch (11171) is provided in a middle of the connection strip (1117) and configured to cause the connection strip (1117) to break when the each of the cells contact sub-sheets is pulled.

9. The cells contact sheet of claim 1, **characterized in that** the acquisition terminal sheet is provided with a buffer notch (11151) between the first end and the second end.

10. The cells contact sheet of any one of claims 1-4, **characterized in that** each of the cells contact sub-sheets has an edge connected with a bent terminal sheet (113) configured to acquire a temperature signal of one of the cell groups corresponding to the each of the cells contact sub-sheets.

11. A cells contact system (001), **characterized by** comprising:
a holder (012);
a plurality of busbars (013) arranged in parallel on the holder (012) and configured to be respectively connected with a plurality of cell groups of a battery module; and
a cells contact sheet of any one of claims 1-10,
wherein the plurality of cells contact sub-sheets are opposite to and connected with the plurality of busbars (013), respectively.

12. A battery pack, **characterized by** comprising:
a housing (002) having a first accommodating cavity (021) and a second accommodating cavity (022) arranged in a longitudinal direction;
at least one battery module (008) arranged in the first accommodating cavity (021), the battery module (008) comprising a plurality of cell groups (081) arranged in the longitudinal direction;
a battery management system board arranged in the second accommodating cavity (022); and at least one cells contact system of claim 11 arranged in the first accommodating cavity (021), wherein one of the cells contact sub-sheets is provided with a first signal output terminal connected to the battery management system board.

13. The battery pack of claim 12, **characterized in that** the at least one battery module comprises a plurality of battery modules, and the at least one cells contact system comprises a plurality of cells contact systems respectively corresponding to the plurality of battery modules; and
the plurality of battery modules are sequentially arranged in a transverse direction perpendicular to the longitudinal direction.

14. The battery pack of claim 13, **characterized in that** a longitudinal beam (024) is arranged between every two adjacent ones of the plurality of battery modules and connected to an inner wall of the housing.

## Patentansprüche

1. Zellenkontaktfolie (011), die einstückig geformt und auf ein Batteriemodul anwendbar ist, das eine Vielzahl von Zellengruppen umfasst, wobei die Zellenkontaktfolie (011) umfasst:
eine Vielzahl von Zellkontakt-Teilfolien (111), die so konfiguriert sind, dass sie jeweils Arbeitssignale der Vielzahl von Zellgruppen erfassen; und
mindestens eine Verbindungsfolie (112), die flexibel und elektrisch leitfähig ist,
wobei jede der mindestens einen Verbindungsfolie (112) zwischen jeweils zwei benachbarten der Zellkontakt-Teilfolien (111) angeordnet ist, um die jeweils zwei benachbarten der Zellkontakt-Teilfolien (111) miteinander zu verbinden;
dass jede der mindestens einen Verbindungsfolien (112) mit einer ersten Biegestruktur (1121) versehen ist, die so konfiguriert ist, dass sie sich verformt, wenn sich zwei der Zellgruppen, die jeweils den jeweils zwei benachbarten der Zellkontakt-Teilfolien (111) entsprechen, voneinander entfernen oder sich einander nähern, **dadurch gekennzeichnet, dass** jede der Zellkontakt-Teilfolien einen Spannungserfassungsbereich (1113) aufweist, der eine Erfassungskerbe (1114) umfasst;
eine Erfassungsanschlussfolie (1115) in der Erfassungskerbe (1114) angeordnet ist, um ein Spannungssignal einer der Zellgruppen zu erfassen, die mit jeder der Zellkontakt-Teilfolien in Verbindung steht;
die Erfassungsanschlussfolie (1115) ein erstes Ende, das mit einer ersten Seitenfläche der Erfassungskerbe (1114) verbunden ist, und ein zweites Ende aufweist, das dem ersten Ende gegenüberliegt und mit einer zweiten Seitenfläche der Erfassungskerbe (1114) verbunden ist; und
ein Spalt (1116), der sich in einer Richtung vom ersten Ende zum zweiten Ende erstreckt, zwischen der Erfassungsanschlussfolie (1115) und der Erfassungskerbe (1114) gebildet wird.

2. Zellenkontaktfolie nach Anspruch 1, **dadurch gekennzeichnet, dass** jede der mindestens einen Verbindungsfolien ferner einen Folienkörper umfasst und die erste Biegestruktur relativ zum Folienkörper in Richtung der beiden Zellgruppen vorsteht.

3. Zellenkontaktfolie nach Anspruch 2, **dadurch gekennzeichnet, dass** die erste Biegestruktur eine erste Oberfläche (11211) aufweist, und dass die erste Oberfläche (11211) in der Mitte der ersten Biegestruktur liegt und den beiden Zellgruppen zugewandt ist; und
die erste Fläche (11211) parallel zu jeder der Zellkontakt-Teilfolien ist.

4. Zellenkontaktfolie nach Anspruch 3, **dadurch gekennzeichnet, dass** jede Ecke der ersten Biegestruktur abgerundet ist.

5. Zellenkontaktfolie nach einem der Ansprüche 1-4, **dadurch gekennzeichnet, dass** eine der Zellkontakt-Teilfolien mit einem ersten Signalausgangsanschluss (1111) und einer zweiten Biegestruktur (1112) in der Nähe des ersten Signalausgangsanschlusses (1111) versehen ist; und
die zweite Biegestruktur (1112) so konfiguriert ist, dass sie sich verformt, wenn der erste Signalausgangsanschluss (1111) und zwei der Zellgruppen, die der einen der Zellkontakt-Teilfolien entsprechen, sich voneinander weg oder aufeinander zu bewegen.

6. Zellenkontaktfolie nach Anspruch 5, **dadurch gekennzeichnet, dass** die zweite Biegestruktur eine bogenförmige Struktur mit einer konkaven Seite weg von dem ersten Signalausgangsanschluss umfasst.

7. Zellenkontaktfolie nach Anspruch 1, **dadurch gekennzeichnet, dass** das zweite Ende der Erfassungsanschlussfolie mit der zweiten Seitenfläche der Erfassungskerbe durch eine Verbindungsstruktur verbunden ist und die Verbindungsstruktur so konfiguriert ist, dass sie bricht, wenn an jeder der Zellkontakt-Teilfolien gezogen wird.

8. Zellenkontaktfolie nach Anspruch 7, **dadurch gekennzeichnet, dass** die Verbindungsstruktur einen Verbindungsstreifen (1117) umfasst, dessen zwei Enden jeweils mit dem zweiten Ende der Erfassungsanschlussfolie und der zweiten Seitenfläche der Erfassungskerbe verbunden sind; und
eine Schneidkerbe (11171) in der Mitte des Verbindungsstreifens (1117) vorgesehen ist und so konfiguriert ist, dass sie den Verbindungsstreifen (1117) zum Brechen bringt, wenn an jeder der Zellkontakt-Teilfolien gezogen wird.

9. Zellenkontaktfolie nach Anspruch 1, **dadurch gekennzeichnet, dass** die Erfassungsanschlussfolie mit einer Pufferkerbe (11151) zwischen dem ersten Ende und dem zweiten Ende versehen ist.

10. Zellenkontaktfolie nach einem der Ansprüche 1-4, **dadurch gekennzeichnet, dass** jede der Zellkontakt-Teilfolien eine Kante aufweist, die mit einer gebogenen Anschlussfolie (113) verbunden ist, die so konfiguriert ist, dass sie ein Temperatursignal einer der Zellgruppen erfasst, die jeder der Zellkontakt-Teilfolien entspricht.

11. Ein Zellenkontaktsystem (001), **dadurch gekennzeichnet, dass** es Folgendes umfasst:
einen Halter (012);
eine Vielzahl von Stromschienen (013), die parallel auf dem Halter (012) angeordnet und so konfiguriert sind, dass sie jeweils mit einer Vielzahl von Zellengruppen eines Batteriemoduls verbunden werden können; und
eine Zellenkontaktfolie nach einem der Ansprüche 1-10,
wobei die mehreren Zellkontakt-Teilfolien den mehreren Stromschienen (013) jeweils gegenüberliegen und mit diesen verbunden sind.

12. Batteriepack, **dadurch gekennzeichnet, dass** es umfasst:
ein Gehäuse (002) mit einem ersten Aufnahmehohlraum (021) und einem zweiten Aufnahmehohlraum (022), die in einer Längsrichtung angeordnet sind;
mindestens ein Batteriemodul (008), das in dem ersten Aufnahmehohlraum (021) angeordnet ist, wobei das Batteriemodul (008) eine Vielzahl von Zellengruppen (081) umfasst, die in der Längsrichtung angeordnet sind; eine Batterieverwaltungssystemplatine, die in dem zweiten Aufnahmehohlraum (022) angeordnet ist; und mindestens ein Zellenkontaktsystem nach Anspruch 11, das in dem ersten Aufnahmehohlraum (021) angeordnet ist, wobei eine der Zellkontakt-Teilfolien mit einem ersten Signalausgangsanschluss versehen ist, der mit der Batterieverwaltungssystemplatine verbunden ist.

13. Batteriepack nach Anspruch 12, **dadurch gekennzeichnet, dass** das mindestens eine Batteriemodul eine Vielzahl von Batteriemodulen umfasst und das mindestens eine Zellenkontaktsystem eine Vielzahl von Zellenkontaktsystemen umfasst, die jeweils der Vielzahl von Batteriemodulen entsprechen; und
die Mehrzahl der Batteriemodule in einer Querrichtung senkrecht zur Längsrichtung hintereinander angeordnet sind.

14. Batteriepack nach Anspruch 13, **dadurch gekennzeichnet, dass** zwischen jeweils zwei benachbarten der mehreren Batteriemodule ein Längsträger (024) angeordnet und mit einer Innenwand des Gehäuses verbunden ist.

## Revendications

1. Feuille de contact de cellules (011) formée intégralement et applicable à un module de batterie comprenant plusieurs groupes de cellules, dans laquelle la feuille de contact de cellules (011) comprend :
une pluralité de sous-feuilles de contact de cellules (111) configurées pour acquérir les signaux de travail de la pluralité de groupes de cellules, respectivement ; et
au moins une feuille de connexion (112) flexible et conductrice d'électricité,
dans laquelle chacune des au moins une feuille de connexion (112) est disposée entre deux sous-feuilles de contact de cellules adjacentes (111) pour relier les deux sous-feuilles de contact de cellules adjacentes (111) l'une à l'autre ;
chacune des au moins une feuille de connexion (112) est pourvue d'une première structure de flexion (1121) configurée pour se déformer lorsque deux des groupes de cellules correspondant respectivement aux deux sous-feuilles de contact de cellules adjacentes (111) s'éloignent ou se rapprochent l'une de l'autre, **caractérisée par le fait que** chacune des sous-feuilles de contact de cellules a une zone d'acquisition de tension (1113) comprenant une encoche d'acquisition (1114) ;
une feuille terminale d'acquisition (1115) est disposée dans l'encoche d'acquisition (1114) pour acquérir un signal de tension de l'un des groupes de cellules correspondant à chacune des sous-feuilles de contact de cellules ;
la feuille terminale d'acquisition (1115) a une première extrémité reliée à une première surface latérale de l'encoche d'acquisition (1114), et une deuxième extrémité opposée à la première et reliée à une deuxième surface latérale de l'encoche d'acquisition (1114) ; et
un espace (1116) s'étendant dans une direction allant de la première à la deuxième extrémité est formé entre la feuille terminale d'acquisition (1115) et l'encoche d'acquisition (1114).

2. Feuille de contact de cellules de la revendication 1, **caractérisée par le fait que** chacune des au moins une feuille de connexion comprend en outre un corps de feuille, et que la première structure de flexion fait saillie, par rapport au corps de feuille, vers les deux groupes de cellules.

3. Feuille de contact de cellules de la revendication 2, **caractérisée en ce que** la première structure de flexion a une première surface (11211), et la première surface (11211) est au milieu de la première structure de flexion et fait face aux deux groupes de cellules ; et
la première surface (11211) est parallèle à chacune des sous-feuilles de contact de cellules.

4. Feuille de contact de cellules de la revendication 3, **caractérisée par le fait que** chaque coin de la première structure de flexion est arrondi.

5. Feuille de contact de cellules de l'une des revendications 1 à 4, **caractérisée par le fait que** l'une des sous-feuilles de contact de cellules est pourvue d'une première borne de sortie de signal (1111) et d'une deuxième structure de flexion (1112) proche de la première borne de sortie de signal (1111) ; et
la seconde structure de flexion (1112) est configurée pour se déformer lorsque la première borne de sortie de signal (1111) et deux des groupes de cellules correspondant à l'une des sous-feuilles de contact de cellules s'éloignent ou se rapprochent l'un de l'autre.

6. Feuille de contact de cellules de la revendication 5, **caractérisée par le fait que** la deuxième structure de flexion comprend une structure en forme d'arc ayant un côté concave éloigné de la première borne de sortie du signal.

7. Feuille de contact de cellules de la revendication 1, **caractérisée par le fait que** la deuxième extrémité de la feuille terminale d'acquisition est reliée à la deuxième surface latérale de l'encoche d'acquisition par une structure de connexion, et que la structure de connexion est configurée pour se rompre lorsque chacune des sous-feuilles de contact de cellules est tirée.

8. Feuille de contact de cellules de la revendication 7, **caractérisée par le fait que** la structure de connexion comprend une bande de connexion (1117) ayant deux extrémités respectivement reliées à la deuxième extrémité de la feuille terminale d'acquisition et à la deuxième surface latérale de l'encoche d'acquisition ; et
une encoche de coupe (11171) est prévue au milieu de la bande de connexion (1117) et configurée pour provoquer la rupture de la bande de connexion (1117) lorsque chacune des sous-feuilles de contact de cellules est tirée.

9. Feuille de contact de cellules de la revendication 1, **caractérisée par le fait que** la feuille terminale d'acquisition est pourvue d'une encoche tampon (11151) entre la première et la deuxième extrémité.

10. Feuille de contact de cellules de l'une des revendications 1 à 4, **caractérisée par le fait que** chacune des sous-feuilles de contact de cellules a un bord relié à une feuille terminale courbée (113) configurée pour acquérir un signal de température de l'un des groupes de cellules correspondant à chacune des sous-feuilles de contact de cellules.

11. Système de contact de cellules (001), **caractérisé par le fait qu'**il comprend :
un support (012) ;
une pluralité de barres omnibus (013) disposées en parallèle sur le support (012) et configurées pour être connectées respectivement à une pluralité de groupes de cellules d'un module de batterie ; et
une feuille de contact de cellules selon l'une des revendications 1 à 10,
dans laquelle la pluralité de sous-feuilles de contact de cellules sont opposées et connectées à la pluralité de barres omnibus (013), respectivement.

12. Bloc-batterie, **caractérisé par le fait qu'**il comprend
un boîtier (002) comportant une première cavité de logement (021) et une seconde cavité de logement (022) disposées dans le sens de la longueur ;
au moins un module de batterie (008) disposé dans la première cavité de logement (021), le module de batterie (008) comprenant plusieurs groupes de cellules (081) disposés dans la direction longitudinale ; une carte de système de gestion de la batterie disposée dans la deuxième cavité de logement (022) ; et au moins un système de contact de cellules de la revendication 11 disposé dans la première cavité de logement (021), dans lequel l'une des sous-feuilles de contact de cellules est pourvue d'une première borne de sortie de signal connectée à la carte de système de gestion de la batterie.

13. Bloc-batterie de la revendication 12, **caractérisé en ce que** l'au moins un module de batterie comprend une pluralité de modules de batterie, et l'au moins un système de contact de cellules comprend une pluralité de systèmes de contact de cellules correspondant respectivement à la pluralité de modules de batterie ; et
la pluralité de modules de batterie sont disposés séquentiellement dans une direction transversale perpendiculaire à la direction longitudinale.

14. Bloc-batterie de la revendication 13, **caractérisé par le fait qu'**une poutre longitudinale (024) est disposée entre deux modules adjacents de la pluralité de modules de batterie et reliée à une paroi intérieure du boîtier.
